# EUROPEAN PATENT APPLICATION

(11) **EP 0 842 723 A1**
(43) Date of publication of application: **20.05.1998**
(21) Application number: 97308816.4
(22) Date of filing: 03.11.1997
(51) Int. Cl.: B23C 5/10

(54) **Throwaway insert for ball end mill**

(30) Priority: 01.11.1996 JP 291738/96; 24.06.1997 JP 167181/97
(71) Applicant: Sumitomo Electric Industries, Ltd., Osaka (JP)
(72) Inventor: Okui, Shoji, 1-1. Koyakita 1-chome, Itami-shi, Hyogo (JP); Emoto, Shigenori, 1-1. Koyakita 1-chome, Itami-shi, Hyogo (JP); Nakakihara, Katuya, 1-1. Koyakita 1-chome, Itami-shi, Hyogo (JP); Maeta, Atuhiko, 1-1. Koyakita 1-chome, Itami-shi, Hyogo (JP); Maeda, Kazuo, 1-1. Koyakita 1-chome, Itami-shi, Hyogo (JP); Maeda, Jun, 1-1. Koyakita 1-chome, Itami-shi, Hyogo (JP)
(74) Representative: Cross, Rupert Edward Blount

(57) **Abstract**

A throwaway insert (10) for a ball end mill which can be seated on a mounting seat (14,15) with accuracy, which can be stably bound to a tool body (13), and which is less like to chip due to shifting of the insert (10) during machining, and can keep high machining accuracy. The throwaway insert (10) has a substantially oval shape as viewed from top, and has two cutting edges (5) arranged symmetrically with respect to the center of the insert. Each cutting edge comprises a straight edge (5b) and an arcuate edge (5a). Two grooves (8) are formed in the insert bottom so as to be symmetrical with respect to the center of the insert. Each groove (8) has an L-shaped section and includes a wall surface parallel to the respective straight cutting edges and perpendicular to the insert bottom. The insert (10) is bound to the tool body (13) so as not to be movable in a diametric direction of the tool by seating a flat side extending along one of the straight cutting edges (5b) and the wall surface of one of the grooves (8) provided parallel to and back to back with the flat side on corresponding surfaces of a mounting seat (14,15).

## Description

### BACKGROUND OF THE INVENTION

This invention relates to a throwaway insert for ball end mill for machining the contour of e.g. a molded material, and more particularly an insert which can be seated accurately and bound stably and on a tool body.

Unlike other turning tools, a ball end mill is used under complicated, severe conditions with the cutting load fluctuating violently. High machining accuracy is also required. Therefore, if throwaway inserts are used for a ball end mill, it is important to position such throwaway inserts accurately with respect to the tool body and clamp and stably on the tool body.

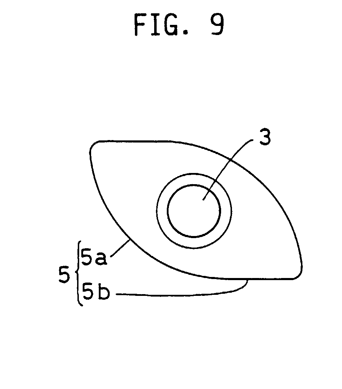

Fig. 9 shows an ordinary conventional throwaway insert (hereinafter simply "insert") for a ball end mill. This insert has two cutting edges 5 each comprising an arcuate edge 5a (ball nose cutting edge) and a straight edge 5b connecting with one end of the arcuate edge 5a and arranged symmetrically with respect to the center of the insert. As a whole, the insert has an oval shape as viewed from top.

This throwaway insert is mounted on a tool body and fixed by a countersunk clamping screw inserted through a central mounting hole 3. This insert has flat side portions which can be used for positioning and binding of the insert, only on the sides only along the straight edges. Thus, if the insert is a positive insert, which is an insert having an inclined side, it is very difficult to accurately seat it on a tool body and bind it stably.

To solve this problem, there has been proposed an arrangement in which a vertical, flat seating surface formed on the lower part of the inclined side, perpendicularly to the insert bottom, is brought into close contact with a vertical, flat wall surface of an insert mounting seat (unexamined Japanese utility model publication 60-22218), and an arrangement in which a straight groove or rib formed on the insert bottom at an angle of less than 90° with respect to the straight portion of the insert is engaged with a complementary rib or groove formed on an insert mounting seat (examined Japanese utility model publication 7-35701).

The throwaway insert disclosed in the publication 60-22218 is mounted on a tool so as to be unmovable in radial and axial directions of the tool by bringing seating surfaces provided along the straight edges in the axial direction of the tool and seating surfaces provided at the corners of the insert in the diametric direction of the tool into close contact with the corresponding seating walls formed on the tool body. With this arrangement, the insert is likely to move diametrically outwardly of the tool. Also, the two kinds of seating surfaces are small in area. The seating surfaces at the corners for binding the movement in the diametric direction of the tool are particularly small in area. Thus, the insert can move easily during machining operation. This worsens machining accuracy and increases the possibility of chipping of the insert.

The throwaway insert disclosed in the publication 7-35701 has a problem in that since the straight rib or groove is provided at an angle less than 90 ° with respect to the straight cutting edges of the insert, it is difficult and thus costly to form such a rib or groove on the insert and the corresponding groove or rib on the tool body with high accuracy. Another problem of this arrangement is that the side or bottom of the insert tends to separate from the main seating surface or wall surface of the mounting seat when the rib or groove of the insert is fitted in the groove or rib of the tool body. (Conversely, if the insert bottom or side is kept in close contact with the mounting seat, it is difficult to fit the insert rib or groove in the groove or rib of the mounting seat with high accuracy.) It is also difficult to stably bind the insert.

There are still numerous other conventional arrangements for binding inserts to tool bodies, including one in which the insert bottom is engaged in a V-shaped mounting seat (patent publication 61-57126). But there are none which can bind the insert stably, and are simple in structure and machining steps at the same time.

A ball end mill proposed by the present applicant in unexamined Japanese patent publication 7-28109 employs an insert-binding structure similar to that disclosed in unexamined Japanese utility model publication 60-22218. But due to unique design of the cutting edges and the rake face (top surface), this insert has the following advantages.
(1) Since the rake angle of the cutting edges at the corners is negative, the cutting edges are strengthened at the corners at the center of rotation of a low-cutting-speed turning tool.
(2) The insert thickness increases diametrically outwardly, so that the strength of the arcuate edges is increased. Thus, the cutting edges are less likely to chip.
(3) Chips can be smoothly discharged.
(4) The rake angle and the height of the cutting edges change in an ideal manner as they move away from the corners so that a workpiece can be cut sharply with the cutting edges smoothly brought into contact with the workpiece.
(5) Due to the effects of (3) and (4), cutting resistance is kept to a minimum.

But it was found out that in order for the insert to fully exhibit these characteristics, it is necessary to bind it more stably to the tool body.

An object of embodiments of this invention is to provide an insert which is not so complicated in structure and less costly, and which can be mounted on a mounting seat with high seating accuracy and binding stability.

### SUMMARY OF THE INVENITON

According to this invention, there is provided a negative or positive type throwaway insert for a ball end mill comprising two cutting edges extending between two diagonally opposed corners and each comprising an arcuate edge and a straight edge connecting with one end of the arcuate edge, a mounting hole formed in the center of the center of the insert, the cutting edges being arranged symmetrically with respect to the center of the insert, the insert having an oval shape as viewed from top, characterized in that two grooves are formed in the bottom of the insert, each of the grooves having an L-shaped section and having a wall surface extending parallel to the respective straight cutting edge and perpendicularly to the insert bottom, the two grooves being arranged so as to be symmetrical with respect to the center of the insert with the mounting hole disposed between the two grooves.

Preferably, grind-finished, flat seating surfaces may be provided at the respective corners of the insert so as to be perpendicular to both the insert bottom and the respective straight cutting edges. Such seating surfaces are formed only at their lower side if the cutting edges are used as main cutting edges, in which 1/4-circle arcuate edges are required, so that the portions of the edges located at the center of rotation of the tool are not removed. If the cutting edges are used as auxiliary cutting edges, which are used in combination with main cutting edges and are mounted at a position away from the center of rotation of the tool, the seating surfaces are formed by partially cutting out the arcuate edges at their portion near the corners.

In the arrangement of an embodiment of this invention, the wall surface of each L-shaped groove formed in the insert bottom is recessed inwardly of the straight cutting edges serving for cutting. It is thus possible to bind the wall surface with a rib formed on the main surface of the mounting seat on the tool and having a thickness substantially equal to the depth of the wall surface. This makes it possible to prevent the movement of the insert in a diametric direction of the tool.

In order to prevent the movement of the insert in a diametric direction of the tool, a flat surface of the insert at side that is not used for cutting is seated on a seating surface on the tool extending substantially parallel to the tool axis. The seating surface is provided parallel to the insert-binding surface of each rib. Thus, the distance between these wall surfaces can be adjusted easily by using the former wall surface as a reference. Since the L-shaped grooves are parallel to the straight edges, the former can be machined easily by using the straight edges as a reference. This ensures precise positioning of the insert without increasing the manufacturing cost.

Since the side of one of the straight cutting edges and the groove wall surface near the other straight cutting edges are used to prevent the insert from moving in a diametric direction of the tool, there is no fear of impairing close contact between the insert bottom and the main seating surface on the tool.

To bind the movement of the insert in the axial direction of the tool, flat seating surfaces are formed at the respective corners of the insert, as is known in the prior art. Since these seating surfaces are perpendicular to both the insert bottom and the straight edges, the insert can be mounted on the mounting seat with tight fit without any play.

Embodiments of the present invention are applicable to a flat-topped insert but is especially applicable to the insert we proposed in unexamined Japanese patent publication 7-28109. By applying an embodiment of the present invention to this insert, it can fully exhibit its expected characteristics. Since the rake face of this insert is not flat, it is preferable to provide a surface that can be used as a reference when the insert bottom is finished by grinding. Also, it is preferable to provide a flat surface parallel to the bottom surface of the insert on its top surface.

Other features and objects of embodiments of the present invention will become apparent from the following description made with reference to the accompanying drawings, in which:

### BRIEF DESCRIPTION OF THE DRAWINGS

Fig. 1A is a plan view of a first embodiment of a throwaway insert according to this invention;
Fig. 1B is a side view of the same, as viewed from a direction perpendicular to line L;
Fig. 1C is a righthand side view of the same;
Fig. 1D is a bottom plan view thereof;
Fig. 1E is a sectional view taken along line I-I of Fig. 1A;
Fig. 1F is a sectional view taken along line II-II of Fig. 1A;
Fig. 1G is a sectional view taken along line III-III of Fig. 1A;
Fig. 1H is a side view of the insert of Fig. 1A, as viewed from a direction perpendicular to the straight cutting edges;
Fig. 2A is a plan view of another embodiment;
Fig. 2B is a side view of the same, as viewed from a direction perpendicular to line L of Fig. 2A;
Fig. 2C is a righthand side view thereof;
Fig. 2D is a bottom plan view thereof;
Fig. 2E is a sectional view taken along line I-I of Fig. 2A;
Fig. 2F is a sectional view taken along line II-II of Fig. 2A;
Fig. 2G is a sectional view taken along line III-III of Fig. 2A;
Fig. 2H is a side view of the insert of Fig. 2A, as viewed from a direction perpendicular to the straight cutting edges;
Fig. 3 is a plan view of a modified version of the insert of Fig. 1 (insert with auxiliary edges);
Fig. 4 is a plan view of a modified version of the insert of Fig. 2 (insert with auxiliary edges);
Fig. 5A is a view of a ball end mill on which are mounted inserts of Figs. 1 and 3, as seen in the direction of X in Fig. 5D;
Fig 5B is a view of the ball end mill of Fig. 5A, as seen in the direction Y in Fig. 5D;
Fig 5C is a view of the same, as seen in the direction Z in Fig. 5D;
Fig. 5D is a front view of the same;
Fig. 5E is a perspective view of the same;
Fig. 6A is a view of a ball end mill on which are mounted inserts of Figs. 2 and 4, as seen in the direction of X in Fig. 6D;
Fig 6B is a view of the ball end mill of Fig. 6A, as seen in the direction Y in Fig. 6D;
Fig 6C is a view of the same, as seen in the direction Z in Fig. 6D;
Fig. 6D is a front view of the same;
Fig. 6E is a perspective view of the same;
Fig. 7A is a plan view of an insert formed with grooves 8 each having a bottom surface extending parallel to the insert bottom and being open at one end thereof;
Fig. 7B is a side view of the same;
Fig. 7C is a transverse section of the insert of Fig. 7A at its central portion;
Fig. 7D is a perspective view of a ball end mill on which is mounted the insert of Fig. 7A; and
Fig. 8A is a plan view of an insert formed with grooves 8 each having a bottom surface extending parallel to the insert bottom and being open at one end thereof;
Fig. 8B is a side view of the same;
Fig. 8C is a transverse section of the same at its central portion;
Fig. 8D is a perspective view of a ball end mill on which is mounted the insert of Fig. 8A; and
Fig. 9 is a plan view of a conventional throwaway insert for a ball end mill.

### DETAILED DESCRIPTION OF THE PREFERRED EMBODIMENT

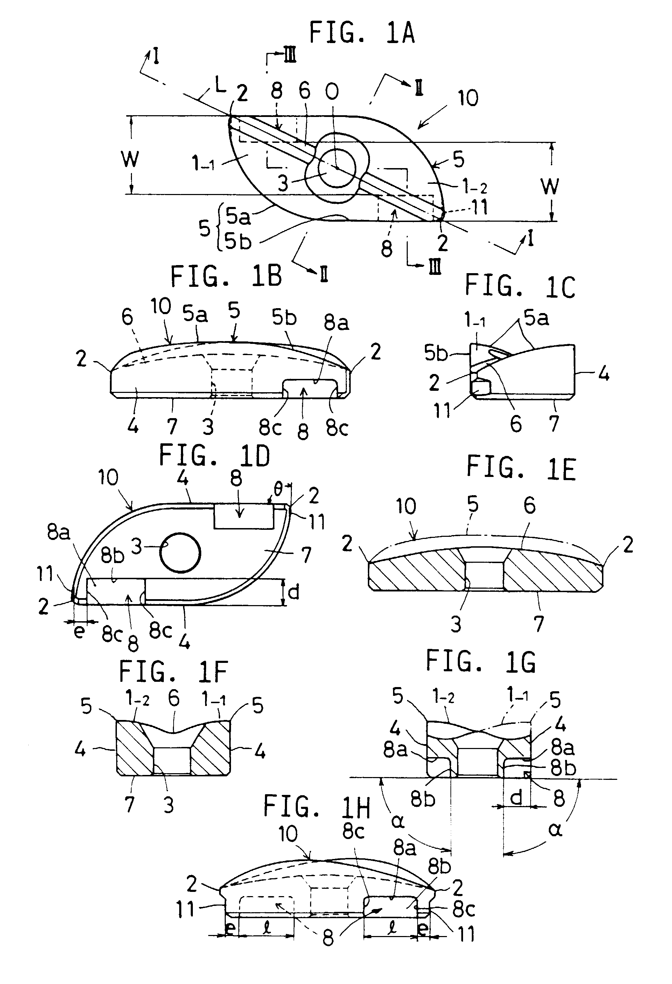

Fig. 1 shows a first embodiment of a throwaway insert for a ball end mill according to this invention. This throwaway insert 10 has diagonally positioned, protruding corners 2 and a mounting hole 3 in the center.

Extending between the two corners 2 are two cutting edges 5 each comprising an arcuate edge 5a and a straight edge 5b (curved on the side view of Fig. 1B) smoothly connecting with the outer end (that is, end remote from the corner) of the arcuate edge 5a and arranged symmetrically with respect to the center O. As a whole, the insert 10 is substantially elliptical in shape as viewed from top (see Fig. 1A).

A round-bottomed groove 6 is formed in the upper surface of insert 10 along the straight line extending between the two corners 2. The top surface of the insert is divided by the groove 6 into two sections 1-1 and 1-2 which extend from the groove in opposite directions to each other. The cutting edges 5 are the ridges defined by the side face 4 and the top surfaces 1-1, 1-2. The insert shown is a negative type insert, i.e. the type in which the side face 4 intersects the bottom surface 7 at a right angle. But this embodiment of the invention is equally applicable to a positive type insert, i.e. an insert of the type in which the side face 4 is inclined.

Fig. 1B shows the side of the insert of Fig. 1A as seen from a direction perpendicular to line L. This figure clearly shows that each cutting edge 5 has an arcuate, upwardly convex configuration so that its ends (corners 2) are at the lowest level.

As shown in Fig. 1F, the top surfaces 1-1, 1-2 as rake faces for the cutting edges 5 are arcuate convex surfaces obliquely rising from the groove 6 toward the cutting edges.

With this insert 10, each cutting edge 5 has a negative rake at the corners 2 and its arcuate edge 5a has a positive rake except at its end (corner). Also, each arcuate edge 5a has a substantially zero rake angle near the corner and its rake angle increases gradually toward its end remote from the corner. Each straight edge 5b has a positive rake.

The physical characteristics of the insert described above, which are essential for the aforementioned various properties of the insert, are all disclosed in unexamined Japanese patent publication 7-28109.

According to embodiments of this invention, as shown in Figs. 1B, 1D, 1G and 1H, two grooves 8 having an L-shaped section are formed in the bottom surface 7 of the insert 10. Each groove recedes inwardly from the straight edge 5b to the depth of d (Fig. 1G), and extends parallel to the straight edge 5b. The two grooves 8 are arranged symmetrically with respect to the center O of the insert. These are the features that characterize embodiments of this invention.

Each groove 8 has a bottom surface 8a parallel to the bottom surface 7 of the insert, a wall surface 8b parallel to the respective straight edge 5b and perpendicular (α = 90 ° Fig. 1G) to the bottom 7 of the insert and two end faces 8c perpendicular to the surfaces 8a and 8b. The distance between each wall surface 8b and the respective straight edge 5b (W in Fig. 1A) is made sufficiently accurate.

The axial length ℓ of the groove 8 (see Fig. 1H) should preferably be about 10-35% of the outer diameter of the ball end mill.

In order to maintain the strength of the insert at its corners, the end face 8c of each groove 8 near the respective corner 2 is spaced from the seating face 11 at the corner 2 by a distance e (Fig. 1D) of preferably 1.0-5.0 mm.

Numeral 11 in Figs. 1C and 1D indicates flat seating faces provided on the arcuate edge side of each corner for the positioning and binding of the insert in the axial direction of the tool.

The seating faces 11 are perpendicular to the bottom 7, and are flat faces forming an angle θ (Fig. 1D) of 90° with respect to the straight edges 5b. In order to prevent the removal of ends of the arcuate edges 5a, the seating faces 11 are provided slightly offset toward the bottom surface 7.

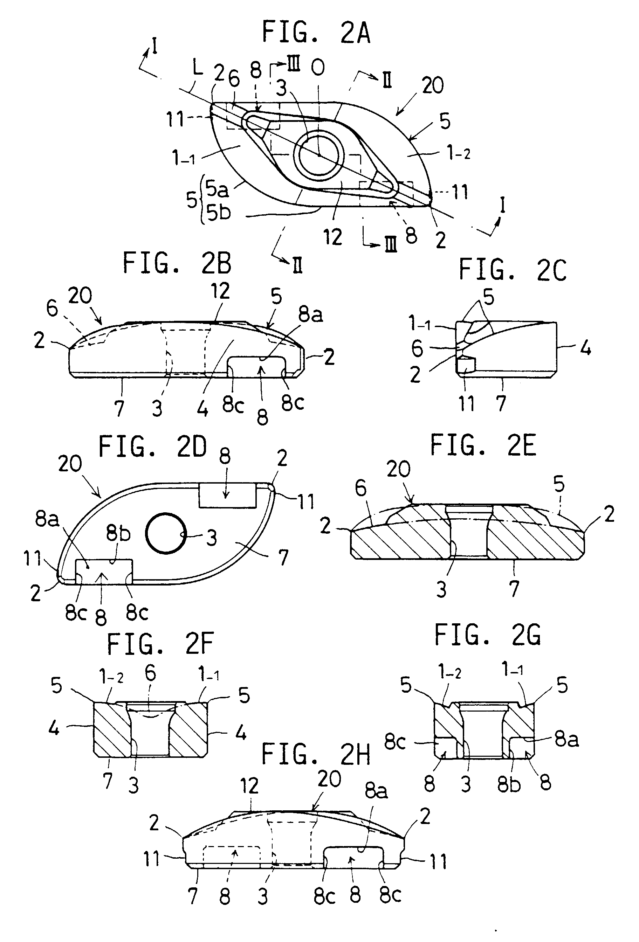

Fig. 2 shows a throwaway insert of a second embodiment. This throwaway insert 20 differs from the insert of Fig. 1 in that a land 12 is provided on the top surface of the insert, and that the bottom surface 7 is finished by grinding with reference to the flat top surface of the land 12.

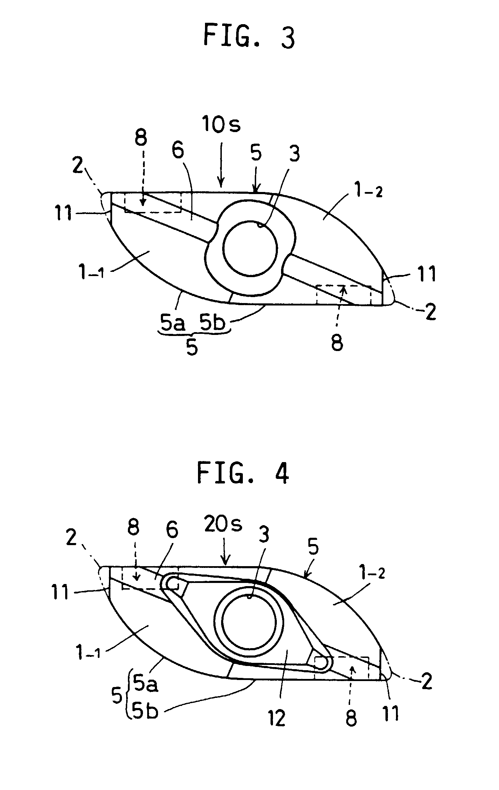

Fig. 3 shows a modified version of the embodiment of the throwaway insert of Fig. 1. The cutting edges of the insert 10 of Fig. 1 are used as main cutting edges. That is, this insert is mounted on a tool body so that one of the cutting edges extends beyond the rotation axis of the tool. On the other hand, a throwaway insert with auxiliary cutting edges is mounted on a tool body so that neither of the cutting edges extends beyond the rotation axis of the tool. The throwaway insert 10S shown in Fig. 3 is the latter type of insert, that is, an insert with auxiliary cutting edges. This insert differs from the insert of Fig. 1 in that it is narrower, and that the arcuate cutting edges 5a are partially cut away at their ends near the corners to form seating faces 11 at the corners.

The throwaway insert 20S shown in Fig. 4 is formed by similarly modifying the insert 20 of Fig. 2.

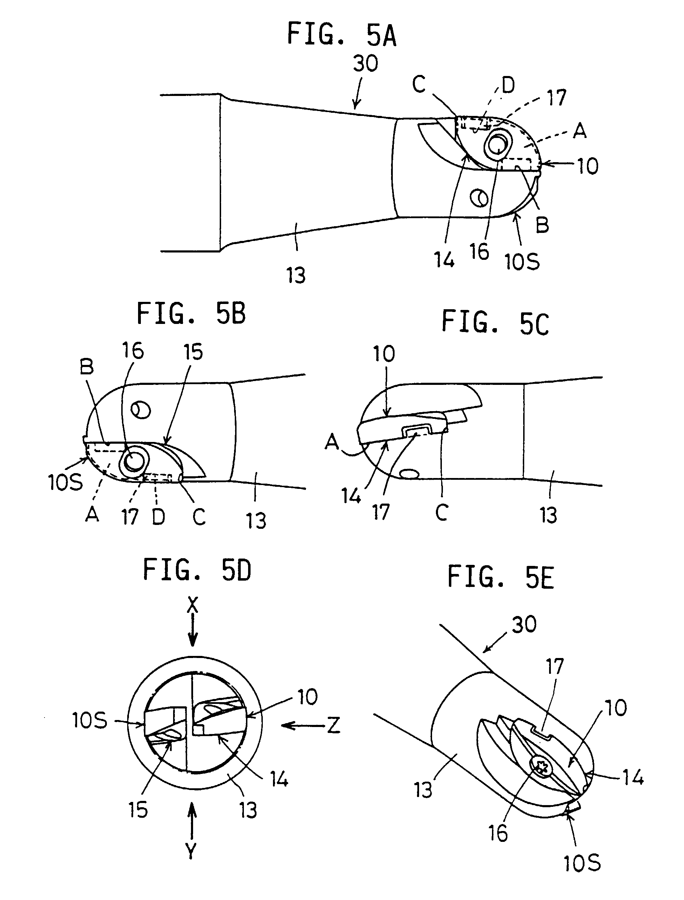

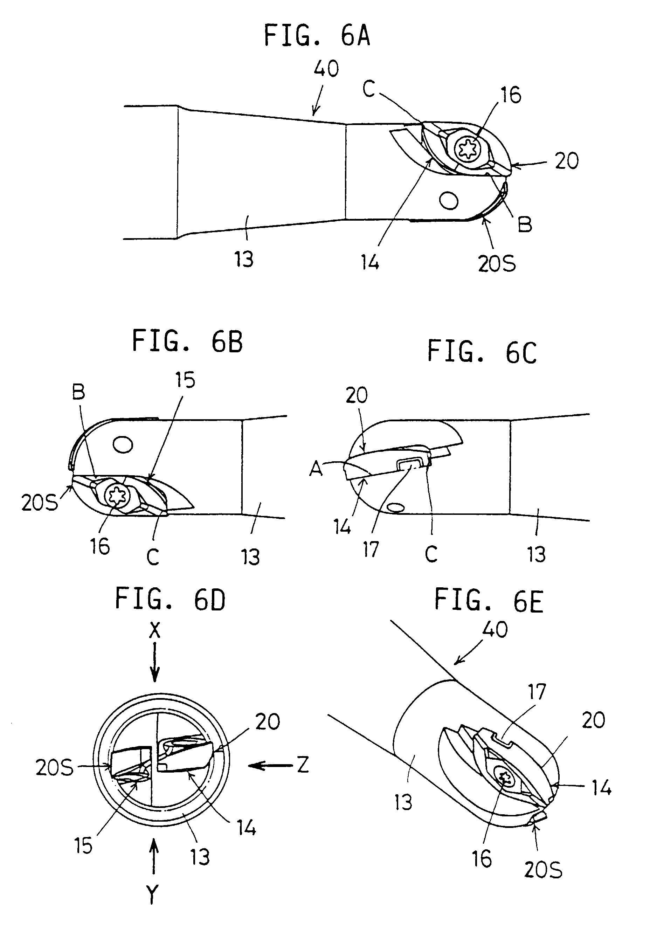

Fig. 5A to 5E show a ball end mill on which are mounted the throwaway insert 10 of Fig. 1, i.e. an insert with main cutting edges, and the throwaway insert 10S of Fig. 3, i.e. an insert with auxiliary cutting edges. Figs 6A to 6E show a ball end mill on which are mounted the throwaway insert 20 of Fig. 2, i.e. an insert with main cutting edges, and the throwaway insert 10S of Fig. 3, i.e. an insert with auxiliary cutting edges.

Numeral 13 in Figs. 5 and 6 designates a tool body having a semispherical portion on which is formed a mounting seat 14 for the insert with main cutting edges, and a mounting seat 15 for the insert with auxiliary edges, the seat 15 being provided diametrically opposite to the seat 14. Each insert is fixed to the tool body 13 by a clamping screw 16.

The tool bodies of Figs. 5 and 6 are identical in shape. The mounting seat 14 thereof for the insert with main cutting edges includes a main seating surface A, a seating wall B substantially parallel to the tool axis, a seating wall C perpendicular to the seating wall B, and a rib 17. The rib 17 is formed on the main seating surface A along the edge of the seat 14, and has a binding surface D facing the seating wall B so as to be parallel to each other. The seating walls B, C and the binding surface D rise perpendicularly from the main seating surface A. The distance between the seating wall B and the binding surface D is equal to W in Fig. 1A (though, in a strict sense, this distance is larger than W by the fitting gap).

The mounting seat 15 has the same structure as the mounting seat 14 except that while the seating wall B of the mounting seat 14 is provided beyond the tool axis, the seating wall B of the mounting seat 15 is provided not beyond the tool axis.

In the arrangement of Fig. 5 (see Figs. 1A-1H, too), the insert 10 with main cutting edges and the insert 10S with auxiliary cutting edges are mounted on the mounting seat 14, 15 respectively, with its bottom supported on the main seating surface A, its side 4 on the seating wall B, its seating faces 11 on the seating wall C, and the wall surface 8b of the groove 8 (at radially outer side of the tool) on the binding surface D. Both the insert 10 with main cutting edges and the insert 10S with auxiliary cutting edges are supported or bound on their three sides (four if the bottom is counted), so that they cannot move in any direction during cutting operation. The inserts can thus fully perform their expected functions in a reliable manner.

The ball end mill 40 shown in Fig. 6 can bind the inserts in exactly the same manner as that shown in Fig. 5.

The ball end mills shown in Figs. 5 and 6 have their seating wall B rising perpendicularly from the main seating surface A, because the inserts mounted are negative types. If positive type inserts are to be mounted, the seating wall B is inclined correspondingly to the inclined side of each insert mounted.

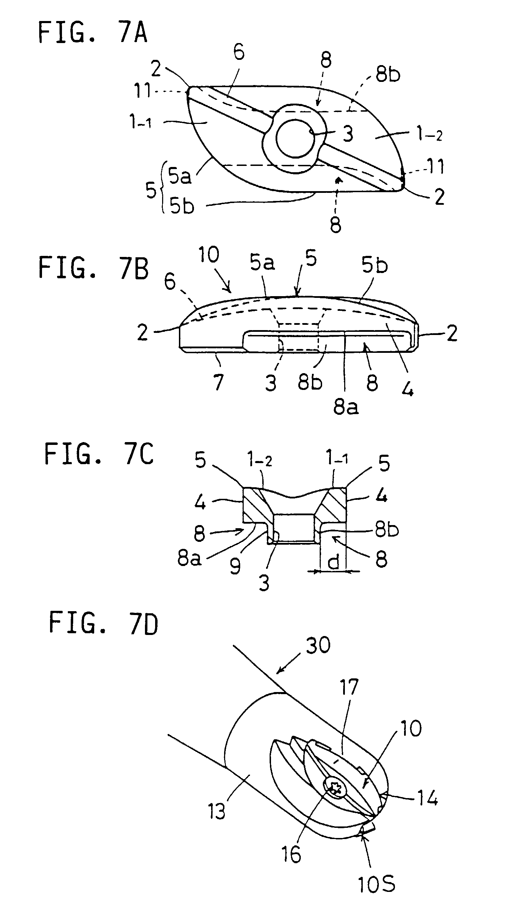

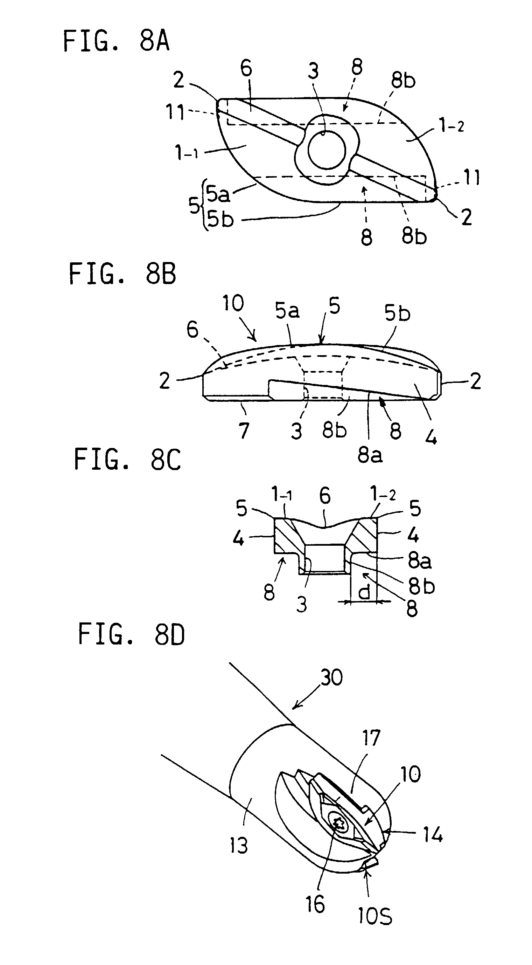

Any of the inserts shown may have grooves 8 having their bottoms 8a parallel to the insert bottom 7 as shown in Figs 7A-7C. But the groove bottoms 8a may be inclined relative to the insert bottom 7 as shown in Figs. 8A and 8C. In either case, the groove 8 has one end disposed near the seating face 11 at the corner and the other end open to the side 4 at the arcuate edge 5a. In either case, as shown in Figs. 7D and 8D, the ribs 17 have to be shaped so as to correspond to the shape of the grooves 8.

As described above, the throwaway insert according to embodiments of this invention is provided in its bottom with two grooves having an L-shaped section and arranged symmetrically with respect to the center of the bottom. It is thus possible to unmovably hold the flat wall surface of one of the grooves with the binding surface of the rib formed on the main seating surface of the mounting seat on the tool. This in turn prevents the insert from shifting during use in any of three directions, i.e. diametrically outwardly and inwardly and axially of the tool axis.

The wall surface of each groove having an L-shaped section is perpendicular to the insert bottom and parallel to the respective straight cutting edge. The binding surface of the rib on each mounting seat on the tool is perpendicular to the main seating surface and parallel to the seating surface for binding the side of the insert. The wall surface of each groove and the binding surface of the rib can be easily machined with reference to the straight edge and the seating surface for binding the side of the insert, respectively. It is also possible to keep the bottom and side of the insert in close contact with the mounting seat. The insert can thus be seated accurately and bound stably and reliably, so that the machining accuracy is kept high and the insert is less likely to chip. Maintenance cost is thus kept low.

## Claims

1. A negative or positive type throwaway insert for a ball end mill comprising two cutting edges extending between two diagonally opposed corners and each comprising an arcuate edge and a straight edge connecting with one end of said arcuate edge, a mounting hole formed in the center of said insert, said cutting edges being arranged symmetrically with respect to the center of said insert, said insert having an oval shape as viewed from top, characterized in that two grooves are formed in the bottom of the insert, each of said grooves having an L-shaped section and having a wall surface extending parallel to said respective straight cutting edge and perpendicularly to the insert bottom, said two grooves being arranged so as to be symmetrical with respect to the center of said insert with said mounting hole disposed between said two grooves.

2. A throwaway insert as claimed in claim 1 further having flat seating surfaces each provided on the respective corner of the insert at lower portion of arcuate side thereof, said seating surfaces being arranged perpendicularly to both the insert bottom and said respective straight cutting edge.

3. A throwaway insert as claimed in claim 1 further including flat seating surfaces formed at said respective corners of the insert by partially cutting out said respective arcuate cutting edges so as to be perpendicular to both the insert bottom and said respective straight cutting edges.

4. A throwaway insert as claimed in any of claims 1-3 wherein said insert has a flat surface on top surface thereof, said flat surface extending parallel to the insert bottom.
